# EUROPEAN PATENT APPLICATION

(11) **EP 3 381 743 A1**
(43) Date of publication of application: **03.10.2018**
(21) Application number: 18157670.3
(22) Date of filing: 20.02.2018
(51) Int. Cl.: B60N 2/225

(54) **SEAT RECLINING DEVICE**

(30) Priority: 29.03.2017 JP 2017064172
(71) Applicant: TF-Metal Co., Ltd., Kosai-shi, Shizuoka 431-0304 (JP)
(72) Inventor: OISHI, Kunihisa, Kosai-shi, Shizuoka 431-0304 (JP)
(74) Representative: Ashton, Timothy

(57) **Abstract**

A seat reclining device (1) includes: a first gear member (2); a second gear member (3); paired wedge members (10, 10) arranged in an eccentric space (9); a biasing member (11) which biases the paired wedge members in directions away from each other; and a drive member (14). The drive member includes a first drive protrusion (4d) which is arranged in a small-width portion (9a) of the eccentric space and a second drive protrusion (4e) which is arranged in a large-width portion (9b) of the eccentric space. When the drive member rotates the paired wedge members, counterforce acting on a shaft portion (4b) of the drive member against first pressing force generated by the first drive protrusion pressing one of the paired wedge members and second pressing force generated by the second drive protrusion pressing the other one of the paired wedge members pushes a boss portion (2a) of the first gear member in a direction toward the one wedge member.

## Description

### Technical Field

The present invention relates to a seat reclining device.

### Background Art

A seat reclining device has been conventionally publicly known (see, for example, Japanese Patent Application Publication No. 2008-200442).

This type of seat reclining device includes: a first gear member which includes a boss portion and one of an internal gear and an external gear; and a second gear member which includes an inner peripheral surface portion forming an eccentric space together with an outer peripheral surface of the boss portion and the other one of the internal gear and the external gear. This seat reclining device further includes paired wedge members which are arranged in the eccentric space, a biasing member which biases the paired wedge members in directions away from each other, and a drive member. The drive member has drive protrusions arranged in a small-width portion of the eccentric space.

The drive member is inserted into the eccentric space to press and rotate the paired wedge members in a circumferential direction. A meshing portion where the external gear is in mesh with the internal gear can be thereby shifted along the circumference and the second gear member can be rotated relative to the first gear member in the direction opposite to the rotating direction of the meshing portion with the speed of rotation of the second gear member relative to the first gear member reduced with a high reduction ratio.

### Summary

Load acts on a back of a seat (seatback) in a rotating direction in which the seatback is tilted rearward (rearward tilt rotating direction) due to weights of an occupant and the seatback itself. Accordingly, when the paired wedge members are rotated in the eccentric space in a rotating direction in which the seat back is pulled uprightly (upright rotating direction), a gap (clearance) may be formed between an inner peripheral surface of one of the wedge members and an outer peripheral surface of the boss portion. When the pressing force acting on the wedge members is released in switching from the operation in the upright rotating direction to the operation in the rearward tilt rotating direction in reverse, the first gear member and the second gear member move relative to each other such that the gap between the inner peripheral surface of the wedge member and the outer peripheral surface of the boss portion is eliminated, and this sometimes causes vibration.

An object of the present invention is to reduce vibration in drive reversal which may occur due to formation of a gap between an inner peripheral surface of a wedge member and an outer peripheral surface of a boss portion.

A seat reclining device according to the present invention includes: a first gear member which includes a boss portion formed on an inner peripheral side and one of an internal gear and an external gear formed on an outer peripheral side; a second gear member which includes an inner peripheral surface portion formed on an inner peripheral side and forming an eccentric space together with an outer peripheral surface of the boss portion and the other one of the internal gear and the external gear formed on an outer peripheral side; paired wedge members which are arranged in the eccentric space; a biasing member which biases the paired wedge members in directions away from each other; and a drive member which includes a shaft portion rotatably supported on an inner peripheral surface of the boss portion. The drive member includes a first drive protrusion which is arranged in a small-width portion of the eccentric space and a second drive protrusion which is arranged in a large-width portion of the eccentric space. When the drive member rotates the paired wedge members, counterforce acting on the shaft portion of the drive member against first pressing force generated by the first drive protrusion pressing one of the paired wedge members and second pressing force generated by the second drive protrusion pressing the other one of the paired wedge members pushes the boss portion of the first gear member in a direction toward the one wedge member.

The seat reclining device according to the present invention can reduce vibration in drive reversal which may occur due to formation of a gap between an inner peripheral surface of a wedge member and an outer peripheral surface of a boss portion.

### Brief Description of Drawings

Fig. 1 is an exploded perspective view of a seat reclining device according to an embodiment of the present invention.
Fig. 2 (a) is a front view of the seat reclining device, and Fig. 2 (b) is a cross-sectional view taken along the line A-A in Fig. 2 (a).
Fig. 3 is a schematic plan view illustrating a state where a cover is removed from the seat reclining device.
Fig. 4 is a schematic plan view illustrating a relationship between the paired wedge members and the first and second drive protrusions.

### Description of Embodiments

An embodiment of the present invention is described below in detail together with the drawings.

A seat reclining device is a device which allows adjustment of an angle of a seatback relative to a seat cushion by providing an operation transmission mechanism between a bracket provided in the seat cushion and a bracket provided in the seatback.

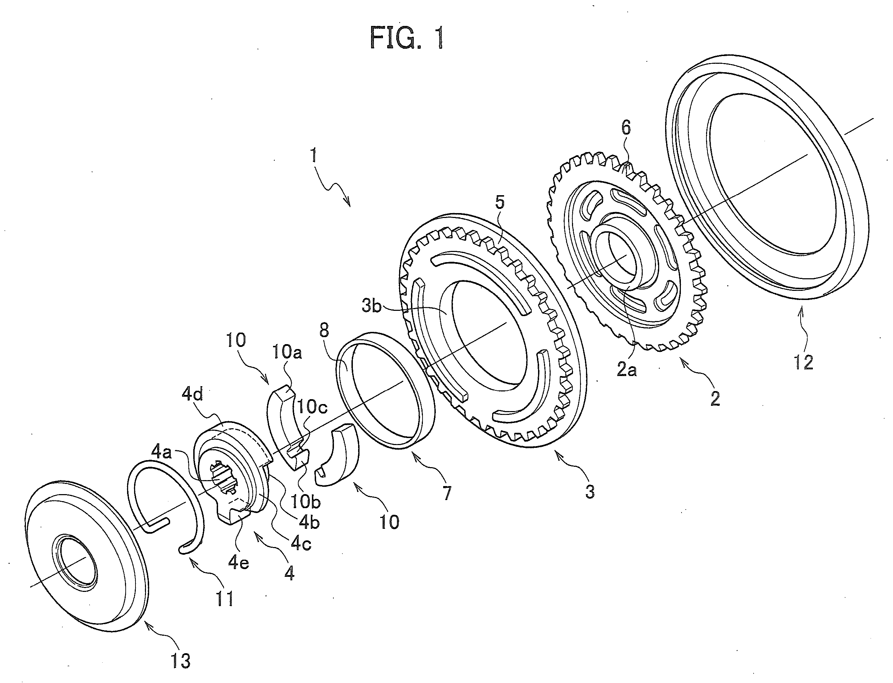

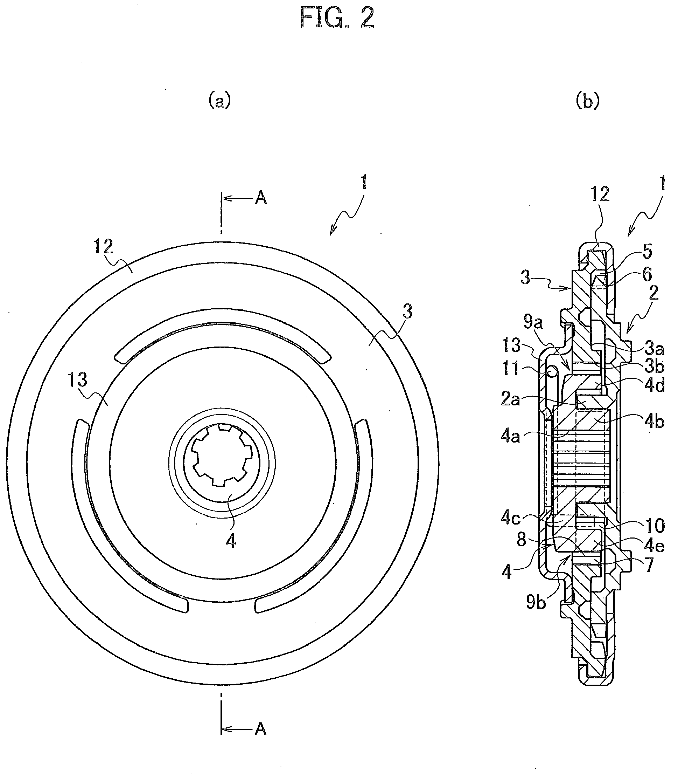

A seat reclining device 1 in the embodiment is a device which is also known as a round recliner and which is the aforementioned operation transmission mechanism formed as one unit. As illustrated in Figs. 1 to 3, the seat reclining device 1 mainly includes a first gear member 2 which is coupled to a bracket (arm bracket) provided at a lower end of the seatback (not illustrated), a second gear member 3 which is coupled to a bracket (fixed bracket) provided at a rear end of the seat cushion (not illustrated), a drive member 4, and a motor (not illustrated) which is fixed to the seatback and which rotationally drives the drive member 4. Multiple axial grooves (splines) 4a are formed in the drive member 4 at intervals in a circumferential direction so that an input shaft of the motor can be inserted and coupled to the drive member 4. The seat reclining device 1 is configured such that, when the drive member 4 rotates in one direction, the first gear member 2 rotates relative to the second gear member 3 in a direction opposite to the rotating direction of the drive member 4 with a high reduction ratio.

A circular recess portion 3a is formed on a surface of the second gear member 3 which faces the first gear member 2, and an internal gear 5 having a predetermined number of internal teeth is formed on an inner periphery of the recess portion 3a. Moreover, an external gear 6 having a predetermined number of external teeth is formed on an outer periphery of the first gear member 2. The first gear member 2 is arranged in the recess portion 3a of the second gear member 3, and the internal gear 5 of the second gear member 3 and the external gear 6 of the first gear member 2 thereby come into mesh with each other.

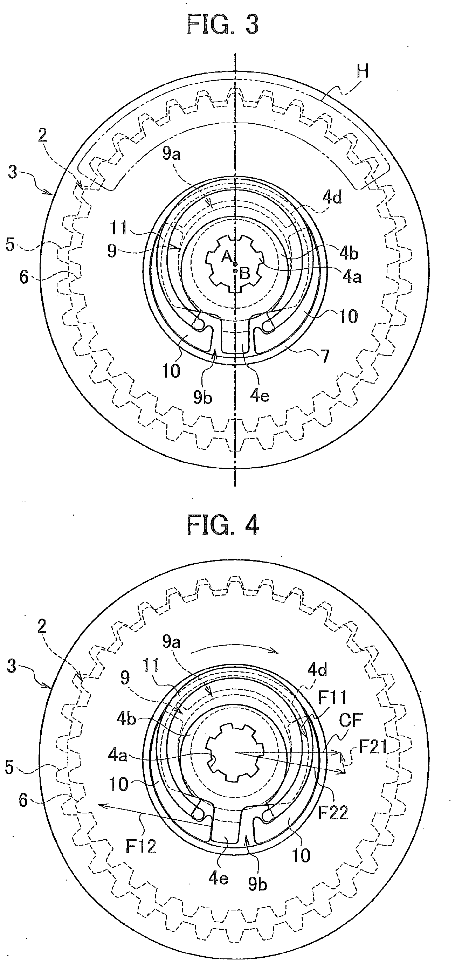

The number of internal teeth in the internal gear 5 is, for example, 34 while the number of external teeth in the external gear 6 is 33, and the number of teeth in the external gear 6 is fewer than the number of teeth in the internal gear 5 by one. Since the number of teeth in the external gear 6 is fewer than the number of teeth in the internal gear 5, as illustrated in Fig. 3, the center A of the external gear 6 is located at a position eccentric to the center B of the internal gear 5 in a state where the internal gear 5 and the external gear 6 are in mesh.

The seat reclining device 1 is provided with a mechanism for shifting a meshing portion H (see Fig. 3) where the external gear 6 is in mesh with the internal gear 5, in the circumferential direction. This mechanism is configured as follows.

An inner peripheral surface 3b concentric with the internal gear 5 is formed in the second gear member 3. A bush 7 being a slide bearing is press-fitted into the inner peripheral surface 3b of the second gear member 3 and an inner peripheral surface portion 8 concentric with the internal gear 5 is thereby formed in the bush 7. Meanwhile, a boss portion 2a concentric with the external gear 6 is formed in the first gear member 2. The portion of the external gear 6 in the first gear member 2 is inserted into the recess portion 3a of the second gear member 3 and the internal gear 5 and the external gear 6 are brought into mesh with each other. This forms an annular eccentric space 9 between an inner peripheral surface (inner peripheral surface portion 8) of the bush 7 and an outer peripheral surface of the boss portion 2a. Paired wedge members 10, 10 are arranged in the eccentric space 9. The paired wedge members 10, 10 move in the eccentric space 9 in the circumferential direction by sliding on the inner peripheral surface (inner peripheral surface portion 8) of the bush 7 and the outer peripheral surface of the boss portion 2a, and this causes the center A of the external gear 6 to revolve about the center B of the internal gear 5. Moreover, a certain portion of the external gear 6 corresponding to the paired wedge members 10, 10 is pushed toward the internal gear 5 to form the meshing portion H, and the meshing portion H shifts in the circumferential direction.

If a single wedge member 10 is used, a backlash in the meshing portion H changes when there are variations in dimensions. In order to constantly maintain a state without backlash, the paired wedge members 10, 10 are used and a biasing member (spring) 11 which biases the wedge members 10, 10 in directions away from each other in the circumferential direction is provided to handle this. Each wedge member 10 has a small-width side end surface 10a and a large-width side end surface 10b. A notch portion 10c which engages with an end portion of the biasing member 11 is formed in an end portion on the large-width side end surface 10b side (large-width side end portion). The biasing member 11 has a ring shape and both ends thereof are bent in an axial direction to engage with the notch portions 10c of the respective wedge members 10, 10. The biasing member 11 has biasing force acting in such a direction that the wedge members 10, 10 are moved away from each other.

The drive member 4 includes a shaft portion 4b which is inserted in the boss portion 2a formed on the inner peripheral side of the first gear member 2 and which is rotatably supported on an inner peripheral surface of the boss portion 2a and a flange portion 4c which is formed integrally with the shaft portion 4b and which prevents the paired wedge members 10, 10 from moving in the axial direction and falling out. The drive member 4 further includes a first drive protrusion 4d which extends from the flange portion 4c in the axial direction to protrude into a small-width portion 9a of the eccentric space 9 and a second drive protrusion 4e which extends from the flange portion 4c in the axial direction to protrude into a large-width portion 9b of the eccentric space 9. The first drive protrusion 4d and the second drive protrusion 4e are set small enough not to come into contact with the inner peripheral surface portion 8 of the second gear member 3. By inserting the shaft portion 4b of the drive member 4 into the boss portion 2a of the first gear member 2, the first drive protrusion 4d is inserted into the small-width portion 9a of the eccentric space 9 in the axial direction to be located near the small-width side end surfaces 10a of the paired wedge members 10, 10, and the second drive protrusion 4e is inserted into the large-width portion 9b of the eccentric space 9 in the axial direction to be located near the large-width side end surfaces 10b of the paired wedge members 10, 10.

The seat reclining device 1 is provided with a holder ring (connection ring) 12 which covers outer peripheries of the first gear member 2 and the second gear member 3 and restricts movements of the first gear member 2 and the second gear member 3 relative to each other in the axial direction while allowing the first gear member 2 and the second gear member 3 to rotate relative to each other in a state where the aforementioned members are assembled.

Moreover, as illustrated in Fig. 3, one side surface of the eccentric space 9 in the axial direction is open, and the drive member 4 and the biasing member 11 are arranged on the open side surface. Accordingly, a cover (lid member) 13 covering side surfaces of the drive member 4 and the biasing member 11 is provided on the seat reclining device 1 to prevent the paired wedge members 10, 10, the drive member 4, and the biasing member 11 from falling out.

Next, basic operations of the seat reclining device 1 according to the embodiment are described.

When the drive member 4 is rotationally driven toward one side in the circumferential direction by the not-illustrated motor, the drive member 4 pushes one of the paired wedge members 10, 10. In this case, the biasing member 11 is slightly compressed and the other wedge member 10 is slightly moved in the same direction by an amount corresponding to the compression. These actions are repeated and the paired wedge members 10, 10 are thus moved in the circumferential direction in the eccentric space 9. The internal gear 5 and the external gear 6 thereby come into mesh in a certain portion in the circumferential direction which corresponds to the paired wedge members 10, 10, and the meshing portion H where the gears are in mesh shifts in the circumferential direction. When the meshing portion H revolves once, since the number of teeth in the external gear 6 is fewer than the number of teeth in the internal gear 5 by one, the external gear 6 rotates more by an amount corresponding to one tooth in the direction opposite to the rotating direction of the drive member 4. Accordingly, the second gear member 3 rotates, together with the seat cushion, relative to the first gear member 2 coupled to the seatback in the direction opposite to the rotating direction of the drive member 4 with the speed thereof reduced with a high reduction ratio. As a result, the seatback is turned relative to the seat cushion.

Note that, although the external gear 6 is formed in the first gear member 2 and the internal gear 5 is formed in the second gear member 3 in the embodiment, the configuration is not limited to this and may be such that the internal gear 5 is formed in the first gear member 2 and the external gear 6 is formed in the second gear member 3.

Operations and effects of the embodiment are described below.
(1) The seat reclining device 1 includes: the first gear member 2 which includes the boss portion 2a formed on the inner peripheral side and one of the internal gear 5 and the external gear 6 formed on the outer peripheral side; the second gear member 3 which includes the inner peripheral surface portion 8 formed on the inner peripheral side and forming the eccentric space 9 together with the outer peripheral surface of the boss portion 2a and the other one of the internal gear 5 and the external gear 6 formed on the outer peripheral side; the paired wedge members 10, 10 which are arranged in the eccentric space 9; the biasing member 11 which biases the paired wedge members 10, 10 in the directions away from each other; and the drive member 4 which includes the shaft portion 4b rotatably supported on the inner peripheral surface of the boss portion 2a. The drive member 4 includes the first drive protrusion 4d which is arranged in the small-width portion 9a of the eccentric space 9 and the second drive protrusion 4e which is arranged in the large-width portion 9b of the eccentric space 9. When the drive member 4 rotates the paired wedge members 10, 10, counterforce CF acting on the shaft portion 4b of the drive member 4 against first pressing force F11 generated by the first drive protrusion 4d pressing one of the paired wedge members 10, 10 and second pressing force F12 generated by the second drive protrusion 4e pressing the other one of the paired wedge members 10, 10 pushes the boss portion 2a of the first gear member 2 in a direction toward the one wedge member (see Fig. 4).

As illustrated in Fig. 4, while the drive member 4 is rotationally driven toward one side in the rotating direction, the first drive protrusion 4d of the drive member 4 presses the small-width side end surface 10a of the wedge member 10 on the rear side in the rotating direction and the second drive protrusion 4e presses the large-width side end surface 10b of the wedge member 10 on the front side in the rotating direction. Accordingly, during the rotational drive of the drive member 4, first counterforce F21 against the first pressing force F11 generated by the first drive protrusion 4d pressing one of the paired wedge members 10, 10 acts on the shaft portion 4b of the drive member 4, and second counterforce F22 against the second pressing force F12 generated by the second drive protrusion 4e pressing the other one of the paired wedge members 10, 10 acts on the shaft portion 4b of the drive member 4. The paired wedge members 10, 10 are thereby integrally rotated in the eccentric space 9 and, in this case, the counterforce CF acts on the shaft portion 4b of the drive member 4 in such a way as to push the boss portion 2a toward the wedge member 10 on the rear side in the rotating direction.

Accordingly, the wedge member 10 on the rear side in the rotating direction can be rotated in the eccentric space 9 with the inner peripheral surface and the outer peripheral surface of the wedge member 10 on the rear side in the rotating direction kept in contact respectively with the outer peripheral surface of the boss portion 2a and the inner peripheral surface portion 8 of the second gear member 3 at one or two points. Meanwhile, the wedge member 10 on the front side in the rotating direction moves to expand the eccentric space 9. Accordingly, the wedge member 10 on the front side in the rotating direction can be rotated in the eccentric space 9 with the inner peripheral surface and the outer peripheral surface of the wedge member 10 on the front side in the rotating direction kept in contact respectively with the outer peripheral surface of the boss portion 2a and the inner peripheral surface portion 8 of the second gear member 3 at one or two points.

This suppresses formation of a gap (clearance) between the inner peripheral surface of the wedge member 10 on the rear side in the rotating direction and the outer peripheral surface of the boss portion 2a while the drive member 4 is rotationally driven toward one side in the rotating direction. Accordingly, it is possible to reduce misalignment of the boss portion 2a (backlash of the seatback), that is generation of vibration which occurs due to a gap between the inner peripheral surface of the wedge member 10 and the outer peripheral surface of the boss portion 2a when the rotating direction of the drive member 4 is reversed by being switched from one side to the other side.

During the rotational drive of the drive member 4, the paired wedge members 10, 10 can be kept in contact with the outer peripheral surface of the boss portion 2a and the inner peripheral surface portion 8 of the second gear member 3, irrespective of the rotating direction of the drive member 4 or the magnitude of load applied to the seatback. Accordingly, it is possible to make the operation of the seat reclining device 1 stable and reduce backlash of the seatback.

In summary, the seat reclining device 1 according to the embodiment can reduce vibration in drive reversal which may occur due to formation of a gap between the inner peripheral surface of the wedge member 10 and the outer peripheral surface of the boss portion 2a.

Although the seat reclining device of the present invention has been described by using the aforementioned embodiment as an example, the present invention is not limited to this embodiment and various other embodiments can be employed within a scope not departing from the spirit of the present invention.

For example, although the first gear member is coupled to the seatback and the second gear member is coupled to the seat cushion in the aforementioned embodiment, the present invention is not limited to this configuration. The configuration may be such that the first gear member is coupled to the seat cushion and the second gear member is coupled to the seatback.

Moreover, the number of teeth in the internal gear and the number of teeth in the external gear are not limited to the example described in the aforementioned embodiment and it is only necessary that the number of teeth in the external gear is fewer than the number of teeth in the internal gear.

## Claims

1. A seat reclining device (1) comprising:
a first gear member (2) which includes a boss portion (2a) formed on an inner peripheral side and one of an internal gear (5) and an external gear (6) formed on an outer peripheral side;
a second gear member (3) which includes an inner peripheral surface portion (8) formed on an inner peripheral side and forming an eccentric space (9) together with an outer peripheral surface of the boss portion (2a) and the other one of the internal gear (5) and the external gear (6) formed on an outer peripheral side;
paired wedge members (10, 10) which are arranged in the eccentric space (9);
a biasing member (11) which biases the paired wedge members (10, 10) in directions away from each other; and
a drive member (4) which includes a shaft portion (4b) rotatably supported on an inner peripheral surface of the boss portion (2a), wherein
the drive member (4) includes a first drive protrusion (4d) which is arranged in a small-width portion (9a) of the eccentric space (9) and a second drive protrusion (4e) which is arranged in a large-width portion (9b) of the eccentric space (9), and
when the drive member (4) rotates the paired wedge members (10, 10), counterforce acting on the shaft portion (4b) of the drive member (4) against first pressing force generated by the first drive protrusion (4d) pressing one of the paired wedge members (10, 10) and second pressing force generated by the second drive protrusion (4e) pressing the other one of the paired wedge members (10, 10) pushes the boss portion (2a) of the first gear member (2) in a direction toward the one wedge member (10).
